# EUROPEAN PATENT APPLICATION

(11) **EP 4 030 683 A1**
(43) Date of publication of application: **20.07.2022**
(21) Application number: 21151397.3
(22) Date of filing: 13.01.2021
(51) Int. Cl.: H04L 9/32, G06F 16/27, G06Q 20/40

(54) **TRANSFER OF STATE DATA BETWEEN CHANNELS OF A DECENTRALIZED DISTRIBUTED DATABASE**

(71) Applicant: Siemens Aktiengesellschaft, 80333 München (DE)
(72) Inventor: Singh, Saurabh Narayan, 81739 München (DE)

(57) **Abstract**

The invention relates to a method for transferring state data between different channels of a decentralized distributed database comprising:
- receiving (S1) a request for state data of a first channel from a requesting node of a second channel, wherein the first channel is separated from the second channel,
- selecting (S2) one node of the first channel,
- generating (S3) a zero-knowledge proof depending on the requested state data by the selected node and a respective verification information for verifying the zero-knowledge proof,
- verifying (S4) the zero-knowledge proof by other nodes of the first channel depending on the verification information and outputting a verification result,
- transferring (S5) the requested state data and/or the zero-knowledge proof to the requesting node of the second channel depending on the verification result.

## Description

The present invention relates to a computer-implemented method for transferring state data between different channels of a decentralized distributed database, as well as nodes configured to transfer state data between different channels of a decentralized distributed database, a decentralized distributed database comprising such nodes, and a computer program product.

For a distributed network, e.g. a blockchain, there are multiple use cases where all stakeholders do not necessarily benefit from being part of the same network for all transactions. This has for example led to creation of concepts like side chains, state channels or private transactions in a blockchain. Side chains and state channels allow parallelization of the transaction, increased data throughput and ingrained confidentiality in the application. But this also leads to complete isolation of the activities/transactions in the different sidechains/side-channels. If needed, there states/state data cannot be transferred between the different chains.

With pegging, some blockchain networks provide a way to transfer coins/tokens between different side chains, wherein, while tokens are locked in one sidechain, an equivalent is created on a main chain and released to another side chain. Once the tokens are released, the locked tokens from the previous sidechain are dissolved. However, pegging does not work with states/state data, especially not in a trusted manner. External communication between stakeholders can be used to transfer a state, however, it does not guarantee the validity of the state and is open to man in the middle attacks or collusion. Furthermore, the confidentiality of state information cannot be guaranteed.

The method of zero-knowledge proofs is known from cryptography. This method allows to prove by one party (the prover) to another party (the verifier) that it knows a given information without conveying or revealing any part of the information.

It is an objective of the present invention to find a way to transfer state data between different channels of a decentralized distributed network.

The object is solved by the features of the independent claims. The dependent claims contain further developments of the invention.

The invention provides according to the first aspect a computer-implemented method for transferring state data between different channels of a decentralized distributed database comprising:
- receiving a request for state data of a first channel from a requesting node of a second channel, wherein the first channel is separated from the second channel,
- selecting one node of the first channel,
- generating a zero-knowledge proof depending on the requested state data by the selected node and a respective verification information for verifying the zero-knowledge proof,
- verifying the zero-knowledge proof by other nodes of the first channel depending on the verification information and outputting a verification result,
   and
- transferring the requested state data and/or the zero-knowledge proof to the requesting node of the second channel depending on the verification result.

Unless indicated otherwise in the description below, the terms "perform", "calculate", "computer-aided", "compute", "discover", "generate", "configure", "reconstruct" and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties.

Computers can therefore be for example personal computers, servers, programmable logic controllers (PLCs), handheld computer systems, Pocket PC devices, mobile radios and other communication devices that can process data in computer-aided fashion, processors and other electronic devices for data processing. Within the context of embodiments of the invention, a processor can be understood to mean for example a machine or an electronic circuit. A processor can be in particular a central processing unit (CPU), a microprocessor or a microcontroller, for example an application-specific integrated circuit or a digital signal processor, possibly in combination with a memory unit for storing program instructions, etc. A processor can also be understood to mean a virtualized processor, a virtual machine or a soft CPU. It can, by way of example, also be a programmable processor that is equipped with configuration steps for carrying out the method according to embodiments of the invention or that is configured by means of configuration steps such that the programmable processor realizes the features according to embodiments of the invention for the method, the component, the modules or other aspects and/or sub-aspects of embodiments of the invention.

Within the context of embodiments of the invention, a "module" can be understood to mean for example a processor and/or a memory unit for storing program instructions. By way of example, the processor is configured specifically to execute the program instructions such that the processor performs functions to implement or perform the method according to embodiments of the invention or a step of the method according to embodiments of the invention. A module can, by way of example, also be a node of the distributed database system that for example performs/realizes the specific functions/features of an applicable module. The respective modules can, by way of example, also be in the form of separate or standalone modules. To this end, the applicable modules can comprise further elements, for example. These elements are for example one or more interfaces (e.g. database interfaces, communication interfaces - e.g. network interface, WLAN interface) and/or an evaluation unit (e.g. a processor) and/or a memory unit. The interfaces can be used for example to interchange (e.g. receive, convey, send or provide) data.

Within the context of embodiments of the invention, "provide", in particular in regard to data and/or information, can be understood to mean for example computer-aided provision. Provision is performed for example via an interface (e.g. a database interface, a network interface, an interface to a memory unit). This interface can be used for example to convey and/or send and/or retrieve and/or receive applicable data and/or information during the provision.

Within the context of embodiments of the invention, "smart contract process" can be understood to mean in particular an execution of a program code (e.g. of the control instructions) in a process by the distributed database system or the infrastructure thereof.

Within the context of embodiments of the invention, "transaction" or "transactions" can be understood to mean for example a smart contract, a data structure or a transaction data record that, in particular, each comprise one of the transactions or multiple transactions. Within the context of embodiments of the invention, "transaction" or "transactions" can also be understood to mean for example the data of a transaction of a data block of a blockchain. A transaction can in particular comprise a program code that provides a smart contract, for example. By way of example, within the context of embodiments of the invention, a transaction can also be understood to mean a control transaction and/or confirmation transaction. Alternatively, a transaction can, by way of example, be a data structure that stores data (e.g. the control instructions). A transaction can in particular comprise a program code that provides a smart contract, for example.

Alternatively, a transaction can, by way of example, be a data structure that stores data (e.g. the control instructions). A transaction can, by way of example, also be referred to as a message (that is to say a communication message storing data) or can be a message that e.g. stores applicable data (e.g. control instructions). Embodiments of the invention therefore allows applicable transactions or messages to be interchanged. Transactions can e.g. comprise the control instructions and/or contractual data and/or other data such as video data, user data, measurement data, etc.

Within the context of embodiments of the invention, a "program code" (e.g. a smart contract) can be understood to mean for example a program instruction or multiple program instructions, in particular stored in one or more transactions. The program code is in particular executable and is executed by the distributed database system, for example. This can be realized by means of an execution environment (e.g. a virtual machine). The program code is preferably executed by the infrastructure of the distributed database system. This involves for example a virtual machine being realized by the infrastructure of the distributed database system.

Within the context of embodiments of the invention, a "smart contract" can be understood to mean for example an executable program code (see in particular the "program code" definition). The smart contract is preferably stored in a transaction of a distributed database system (e.g. a blockchain), for example in a data block of the distributed database system. By way of example, the smart contract can be executed in the same way as explained in the definition of "program code", in particular within the context of embodiments of the invention.

Within the context of embodiments of the invention, a (decentralized) "distributed database (system)", can be understood to mean for example a locally distributed database, a blockchain, a distributed ledger, a distributed memory system, a distributed ledger technology (DLT) based system (DLTS), a revision-proof database system, a cloud, a cloud service, a blockchain in a cloud or a peer-to-peer database.

A "distributed database" can also be understood to mean for example a distributed database system that has at least some of its nodes and/or devices and/or infrastructure implemented by a cloud. By way of example, the applicable components are implemented as nodes/devices in the cloud (e.g. as virtual nodes in a virtual machine).

The distributed database (system) can be a public distributed database system (e.g. a public blockchain) or a closed (or private) distributed database system (e.g. a private blockchain), for example.

A distributed database system can also be a distributed communication system for data interchange or a peer-2-peer communication system or a peer-2-peer application, for example. This can be a network or a peer-2-peer network, for example. A/the distributed database system can also be a local distributed database system and/or a local distributed communication system, for example.

Within the context of embodiments of the invention, a "blockchain node", "node", "node of a distributed database system" and the like can be understood to mean for example devices (e.g. field devices), computers, smartphones, clients or subscribers that perform operations for (with) the distributed database system (e.g. a blockchain). Such nodes can, by way of example, execute transactions of a distributed database system or the data blocks thereof or insert or concatenate new data blocks with new transactions into the distributed database system by means of new data blocks.

Within the context of embodiments of the invention, a "channel" of the decentralized distributed database can be understood to mean a side-channel, e.g. sidechain of a blockchain, which can be formed by only part of the network nodes. In other words, only part of the network nodes participates in the (side-)channel. A (side)-channel can be separated from but connected to the main channel. Multiple separate channels can be formed based on the decentralized distributed database. Channels may have their own consensus protocol.

Within the context of embodiments of the invention, a "state" or "status", e.g. a local state or a global state, "state data" - also referred to as "status data" - can be understood to mean the status of a transaction, a status information, a status of the distributed database/blockchain or of the respective side-channel/sidechain regarding at least part of the dataset stored/managed by the distributed database.

Within the context of embodiments of the invention, a "zero-knowledge proof" can be understood as a proof based on a method of zero-knowledge-proofs. A zero-knowledge proof can for example be provided as an information, dataset or data structure comprising proof information depending on the state data/status information to be proved. In other words, the zero-knowledge proof can in particular be generated for specific state data. The zero-knowledge proof provides proof about knowledge/information of state data, without disclosing it.

The generation of a zero-knowledge proof can for example be performed using a known zero-knowledge proof method. For example, witnesses are part of how a zero-knowledge proof is generated. The verifiable information is generated by the prover with the help of witnesses. Witnesses can usually be program constructs and circuits rather than actual actors and stakeholders. Therefore, the provision of a zero-knowledge proof within the context of the invention can be independent of the generation method of the zero-knowledge proof. Generation of a zero-knowledge proof comprises further the generation of verification information related to the zero-knowledge proof, which is used to verify the proof. The verification information especially depends on the state data.

Within the context of embodiments of the invention, "verifying a zero-knowledge proof" can be understood as checking a provided zero-knowledge proof by means of the provided verification information. The verification information is configured to enable a verifier to verify the zero-knowledge proof without revealing the state data. As verification is performed by multiple other nodes of the channel, responsibility of the proof is a collective issue, and does therefore not lie on one entity which could be a single point of failure.

The zero-knowledge proof can therefore support state transfer/exchange as well as proof of state, preferably without disclosing the actual state. This can maintain the trustlessness and immutability promises of a decentralized distributed database.

It is therefore an advantage of the invention that state data can be transferred between different channels of the distributed database preserving confidentiality and validity, and hence also security. By only transferring the zero-knowledge proof to the requesting node, information about state data can be transferred without revealing the state data itself, i.e. data confidentiality is maintained. Nevertheless, as the zero-knowledge proof is verified by other nodes of the first channel, the authenticity is verified.

Adding zero-knowledge proofs at protocol level to a blockchain have an added advantage of consensus-verified proofs and group responsibility of generation as well as verification of the proof. Since the communication happens over the main network, there is also an added advantage of auditability of the proofs on the main network.

By transferring both, state data and corresponding zero-knowledge proof, also the validity of the state data can be verified.

Hence, the proposed method supports state exchange between channels, as well as proof of state without revealing the actual state. This maintains the trustlessness and immutability promises of the decentralized distributed network and adds confidentiality.

The exchange of state data hence can be implemented as part of the database protocol. Therefore, the security is inbuilt in the protocol.

According to a preferred embodiment of the invention the zero-knowledge proof can be transferred to the requesting node without transferring the state data.

According to another embodiment of the invention, in case of a negative verification result, another node of the first channel can be selected, a second zero-knowledge proof depending on the state data can be generated and verified by the other nodes of the first channel and a respective verification result can be outputted.

Hence, iteratively, a verified zero-knowledge proof can be generated and used for transferring state data.

According to another embodiment of the invention, re-selecting the previously selected node can be blocked for a given number of requests.

The zero-knowledge-proof generation can hence be performed iteratively in case of a negative verification result. The originally/previously selected node, which provided the invalid zero-knowledge proof, can be blocked for a given number of requests. This prevents state transfer through e.g. manipulated nodes. The iterations can for example be limited to enhance transfer and/or network security.

According to a preferred embodiment of the invention the node of the first channel is randomly selected.

Randomly selecting a proving node/prover can further enhance trust in the zero-knowledge proof and/or state verification.

According to a further embodiment of the invention, in case of a further request for transfer of state data by a different requesting node and/or at a different point in time, a further zero-knowledge proof can be generated.

Preferably, a zero-knowledge proof is uniquely generated for each state and/or for each state retrieval request.

According to a further embodiment of the invention the verification of the zero-knowledge proof in the first channel can be based on a consensus method performed by the other nodes of the first channel.

Thus, the proof generation can be attested via a consensus, such that the collective responsibility of the proof lies on the entire network channel but not one entity.

According to a further embodiment of the invention the zero-knowledge proof and the verification information can be transferred to an external node outside the decentralized distributed database and the zero-knowledge proof can be verified by this external node.

An external node/party which is not participating in the network can therefore request and receive information about a state without revealing the state itself. For example, the zero-knowledge proof can comprise information about a fulfillment of a contract or about an execution of a transaction to an external entity without revealing details about the contract or the transaction. This maintains confidentiality of state data but enables external nodes to use meta-data.

According to a further embodiment of the invention transferring the requested state data and/or the zero-knowledge proof is controlled by at least one rule of a set rules which are executed by a program code to control data transfer and/or communication between nodes and/or channels within the decentralized distributed database.

This can be for example be implemented by a smart contract, in particular as a governing smart contract controlling the communication and data transfer within the decentralized database. A rule can be for example a transfer rule, i.e. a rule can for example define that state data is only transferred if verification of the corresponding zero-knowledge proof gives a positive verification result.

According to a further embodiment of the invention the decentralized distributed database is a distributed ledger or a blockchain.

The invention provides according to a further aspect a prover node of a first channel of a decentralized distributed database comprising:
- a first interface configured to receive a request for state data of the first channel from a requesting node of a second channel of the decentralized distributed database, wherein the second channel is separated from the first channel,
- a generator configured to generate a zero-knowledge proof depending on the requested state data and a respective verification information for verifying the zero-knowledge proof and
- a second interface configured to provide the zero-knowledge proof and the respective verification information for verifying the zero-knowledge proof to other nodes of the first channel.

The invention provides according to a further aspect a verifier node of a first channel of a decentralized distributed database comprising:
- a first interface configured to receive
- a zero-knowledge proof which was generated depending on state data of the first channel by another node of the first channel, wherein the state data is requested by a requesting node of a second channel of the decentralized distributed database and wherein the second channel is separated from the first channel,
- and a respective verification information for verifying the zero-knowledge proof,
- a verification module configured to verify the zero-knowledge proof depending on the verification information, and
- a second interface configured to output the verification result for transferring the state data and/or the zero-knowledge proof to the requesting node of the second channel.

The invention provides according to a further aspect a decentralized distributed database comprising at least two channels, which are separated from each other, wherein
- the first channel comprises an aforementioned prover node according to the invention and an aforementioned verifier node according to the invention,
   and
- the second channel comprises a requesting node configured to request state data from the first channel.

In addition, a computer program product (non-transitory computer readable storage medium having instructions, which when executed by a processor, perform actions) comprising software code portions for performing the method steps according to embodiments of the invention is claimed when said computer program product is run on a computer.

The invention will be explained in more detail by reference to the accompanying figures.
- Fig. 1:: shows a first exemplary embodiment of the invention;
- Fig. 2:: shows a second exemplary embodiment of the invention;
- Fig. 3:: shows a third exemplary embodiment of the invention; and
- Fig. 4:: shows a fourth exemplary embodiment of the invention.

Equivalent parts in the different figures are labeled with the same reference signs.

Moreover, in particular a (relevant) person skilled in the art, with knowledge of the method claim/method claims, is of course aware of all routine options for realizing products or options for implementation in the conventional art, and so there is no need in particular for independent disclosure in the description. In particular, these customary realization variants known to a person skilled in the art can be realized exclusively by hardware (components) or exclusively by software (components). Alternatively and/or additionally, a person skilled in the art, within the scope of his/her expert ability, can choose to the greatest possible extent arbitrary combinations according to embodiments of the invention of hardware (components) and software (components) in order to implement realization variants according to embodiments of the invention.

Consequently, in particular the features of the individual exemplary embodiments are not restricted to the respective exemplary embodiment, but rather relate in particular to embodiments of the invention in general. Accordingly, features of one exemplary embodiment can preferably also serve as features for another exemplary embodiment, in particular without this having to be explicitly stated in the respective exemplary embodiment.

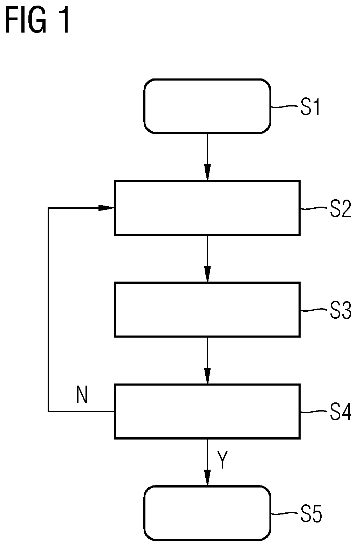

Fig. 1 shows as first exemplary embodiment of the invention a flow-chart presenting method steps of a computer-implemented method for transferring state data between different channels of a decentralized distributed database.

The distributed database preferably comprises multiple nodes, wherein part of the nodes can form at least two channels. It is possible that a node is part of different channels.

In the first step S1 state data, also referred to as state information or state, from a first channel is requested. The request is performed by a requesting node of a second channel. The first channel and second channel are both part of the decentralized distributed database but are separated from/independent of each other, i.e., information transfer or transactions are limited between them. As an alternative or in addition, it is also possible that an external node, which is not part of the distributed network, requests the state data from the first channel. The state data shall be transferred to the requesting node or the external node in a trusted manner, e.g. preserving confidentiality, immutability and/or authenticity of the state data.

In the next step S2, one node of the first channel is selected. Preferably, the node is randomly selected. Selection can for example be performed by a smart contract comprising a selection rule, which is executed depending on a state data request.

In the next step S3, the selected node generates a zero-knowledge proof depending on the requested state data. The selected node can therefore be also called a prover or prover node. It for example retrieves, measures, checks or generates the state data in order to generate a zero-knowledge proof thereof. Zero-knowledge proof generation can be performed using so called witnesses, e.g., other nodes of the first channel, according to known zero-knowledge proof methods. Furthermore zero-knowledge proof generation comprises generating a respective verification information required for verifying the zero-knowledge proof by a verifier and/or a requesting/external node. Hence, the selected node can also generate the verification information. The verification information is particularly linked to the zero-knowledge proof, which, itself depends on the requested state data.

In the next step S4, the zero-knowledge proof generated by the selected node and the verification information are distributed to other nodes of the first channel and the zero-knowledge proof is verified by these other nodes depending on the verification information. The verification result is outputted. Hence, these other nodes perform a check, also called zero-knowledge proof circuit, to evaluate the correctness of the zero-knowledge proof based on the given verification information. In other words, the verification of the zero-knowledge proof checks, whether the prover provides correct/knows information about the respective state data. Hence, the zero-knowledge proof, if verified, provides evidence for correctness and/or validity of state data.

The verification in the first channel can preferably be based on a consensus method performed by the other nodes of the first channel. These other nodes can also be called verifiers or verifier nodes. Preferably, the verifier nodes are also randomly selected.

In case of a further request for transfer of state data by a different requesting node and/or at a different point in time a further zero-knowledge proof is generated. Hence, a proof is preferably unique for a requested state.

Depending on the verification result, the requested state data and/or the zero-knowledge proof is transferred to the requesting node of the second channel or requesting external entity/node.

If the verification result is positive, branch Y, i.e. in case of a valid zero-knowledge proof, the requested state data and/or the zero-knowledge proof can be transferred. Preferably, the zero-knowledge proof is transferred to the requesting node without transferring the state data.

The transferred zero-knowledge proof can then be again verified based on the respective verification information by the requesting node. Furthermore, the requesting node can use the zero-knowledge proof for further actions/transactions. For example, the zero-knowledge proof provides information about a transaction validly effected in the first channel, without disclosing the details about the transaction (merely the information "valid/not valid"). Then, the requesting node can for example perform another transaction in the second channel, depending on the zero-knowledge proof.

If the verification result is negative, branch N, i.e., in case of an invalid zero-knowledge proof, another node of the first channel is selected, a second zero-knowledge proof depending on the state data is generated and verified by the verifier nodes of the first channel and a respective verification result is outputted. Preferably re-selecting the previously selected node, which generated the invalid zero-knowledge proof, is blocked for a given number of requests and/or iterations.

The zero-knowledge proof generation and verification for a state request can be iterated until a valid zero-knowledge proof is generated, such that state data can be transferred.

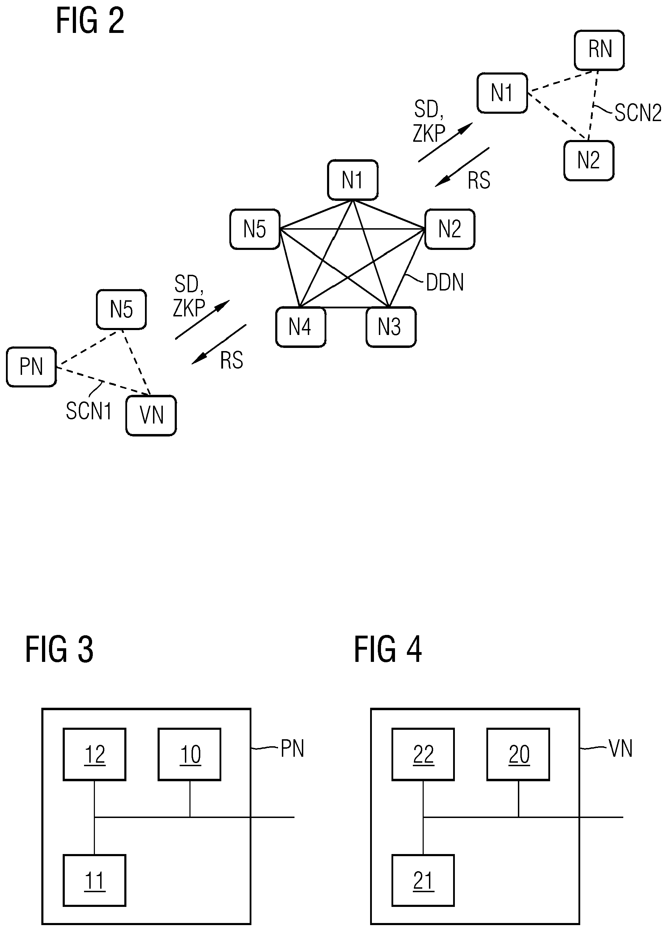

Figure 2 shows a second exemplary embodiment of the invention. Figure 2 shows a decentralized distributed database DDN, e.g. a distributed ledger or a blockchain, comprising a plurality of nodes N1, ..., N5. These nodes can form subchannels SCN1, SCN2, which are part of the distributed database but independent of each other. State data transfer can be enabled according to a method as shown exemplarily shown in Figure 1.

A requesting node RN of the second channel SCN2 can request state data of the first channel SCN1. Requesting nodes can for example be predefined and registered with a governing smart contract of the distributed database, i.e., only requesting nodes RN are allowed to send state requests RS.

The request RS for state data SD of the first channel SCN1 is forwarded to the first channel SCN1 by e.g. the governing smart contract.

In the first channel SCN1 one node is randomly selected to be the prover node PN. The prover node PN generates a zero-knowledge proof ZKP depending on the requested state data. The zero-knowledge proof ZKP is verified by verifier nodes VN of the first channel SCN1 using the corresponding verification information. The prover node can be configured as shown in Figure 3. The verifier node can be configured as shown in Figure 4.

The requesting node RN preferably comprises a verification module configured to verify the zero-knowledge proof by means of the verification information. Preferably, the verification module is configured according to the Fig. 4.

Depending on the verification result, the state data SD and/or the zero-knowledge proof ZKP can be transferred to the requesting node RN of the second channel SCN2.

The data transfer is controlled by at least one rule of a set rules which are executed by a program code, e.g. the governing smart contract, to control data transfer and/or communication between nodes and/or channels within the decentralized distributed database DDN. Preferably this is implemented in a governing contract executable by all nodes of the decentralized distributed database DNN.

In other words, the zero-knowledge proof transfer is performed as follows:
At the beginning, the network starts with a genesis state copied across all nodes forming the whole decentralized network DDN. Based on use cases or requirements, various side chain/state channel networks SCN1, SCN2 can be created. Every side chain votes a set of point of pings, i.e., the nodes in the side chains which are designated to be requested for states, and register them at the governing contract. The requesting node RN identifies the side chain SCN1 from where it requests the state. The requesting node RN pings the governing contract being executed in the main chain and the governing contract in turn pings the point of pings at the first channel SCN1. The point of ping propagates the request in the first channel SCN1 and a random node in the first channel SCN1 is selected to generate the zero-knowledge proof for the request SR. The selected node PN generates the proof and other nodes VN of the first channel SCN1 verify the validity of the proof by executing the zero-knowledge circuit and verifying the solution. If the proof is invalid or found incorrect because of the execution, another random node from the first channel is selected to generate the zero-knowledge proof ZKP. The new proof is again validated by all the verifiers VN. The node which proposed the invalid proof can for example be removed from the list of potential proof generators PN for next few requests. Once agreed upon, the proof is propagated back to the governing contract and this executes and stores the proof on the main chain for future audit and history. The governing contract then provides the proof to the requesting node RN. In case of audit or dispute, the proof can be traced back via governing contract to the respective channels SCN1, SCN2.

As an example, a supply chain use case shall be briefly illustrated. The nodes can for example belong to different suppliers all participating in the decentralized distributed network. For specific purposes, as e.g., asset/data transfer, part of the suppliers can form private channels to keep information confidential. If one supplier requests/needs, e.g., information about a contract fulfillment of sub-suppliers of a different channel, such information can be transferred and validated using a zero-knowledge proof without disclosing contract details.

Figure 3 shows another exemplary embodiment of the invention in block representation. It shows a prover node PN which is configured to provide a zero-knowledge proof for requested state data of a first channel to a requesting node in second channel of of a decentralized distributed database, wherein the second channel is independent of the first channel.

The prover node comprises a first interface 10 which is configured to receive a request for state data of the first channel from the requesting node. The prover further comprises a generator 11 which is configured to generate a zero-knowledge proof depending on the requested state data and at least part of a respective verification information for verifying the zero-knowledge proof. The prover further comprises a second interface 12 which is configured to provide the zero-knowledge proof and the respective verification information for verifying the zero-knowledge proof to other nodes of the first channel.

The prover node can for example be a device or part of a device connected to the decentralized distributed network.

Figure 4 shows another exemplary embodiment of the invention in block representation. It shows a verifier node VN configured to verify a zero-knowledge proof provided by prover node, e.g. as shown in Figure 3.

The verifier node VN comprises a first interface 20 configured to receive the zero-knowledge proof which was generated depending on state data of the first channel by prover node of the first channel (as exemplary shown in Fig. 3), wherein the state data is requested by a requesting node of a second channel of the decentralized distributed database and wherein the second channel is independent of the first channel, and a respective verification information for verifying the zero-knowledge proof.

The verifier node further comprises a verification module 21 configured to verify the zero-knowledge proof depending on the verification information and a second interface 22 configured to output the verification result for transferring the state data and/or the zero-knowledge proof to the requesting node of the second channel.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for transferring state data between different channels of a decentralized distributed database comprising:
- receiving (S1) a request for state data of a first channel from a requesting node of a second channel, wherein the first channel is separated from the second channel,
- selecting (S2) one node of the first channel,
- generating (S3) a zero-knowledge proof depending on the requested state data by the selected node and a respective verification information for verifying the zero-knowledge proof,
- verifying (S4) the zero-knowledge proof by other nodes of the first channel depending on the verification information and outputting a verification result,
and
- transferring (S5) the requested state data and/or the zero-knowledge proof to the requesting node of the second channel depending on the verification result.

2. Computer-implemented method according to claim 1, wherein the zero-knowledge proof is transferred to the requesting node without transferring the state data.

3. Computer-implemented method according to one of the preceding claims, wherein in case of a negative verification result, another node of the first channel is selected, a second zero-knowledge proof depending on the state data is generated and verified by the other nodes of the first channel and a respective verification result is outputted.

4. Computer-implemented method according to claim 3, wherein re-selecting the previously selected node is blocked for a given number of requests.

5. Computer-implemented method according to one of the preceding claims, wherein the node of the first channel is randomly selected.

6. Computer-implemented method according to one of the preceding claims, wherein in case of a further request for transfer of state data by a different requesting node and/or at a different point in time a further zero-knowledge proof is generated.

7. Computer-implemented method according to one of the preceding claims, wherein the verification of the zero-knowledge proof in the first channel is based on a consensus method performed by the other nodes of the first channel.

8. Computer-implemented method according to one of the preceding claims, wherein the zero-knowledge proof and the verification information is transferred to an external node outside the decentralized distributed database and the zero-knowledge proof is verified by this external node.

9. Computer-implemented method according to one of the preceding claims, wherein transferring the requested state data and/or the zero-knowledge proof is controlled by at least one rule of a set rules which are executed by a program code to control data transfer and/or communication between nodes and/or channels within the decentralized distributed database.

10. Computer-implemented method according to one of the preceding claims, wherein the decentralized distributed database is a distributed ledger or a blockchain.

11. Prover node (PN) of a first channel of a decentralized distributed database comprising:
- a first interface (10) configured to receive a request for state data of the first channel from a requesting node of a second channel of the decentralized distributed database, wherein the second channel separated from of the first channel,
- a generator (11) configured to generate a zero-knowledge proof depending on the requested state data and a respective verification information for verifying the zero-knowledge proof
and
- a second interface (12) configured to provide the zero-knowledge proof and the respective verification information for verifying the zero-knowledge proof to other nodes of the first channel.

12. Verifier node (VN) of a first channel of a decentralized distributed database comprising:
- a first interface (20) configured to receive
- a zero-knowledge proof which was generated depending on state data of the first channel by another node of the first channel, wherein the state data is requested by a requesting node of a second channel of the decentralized distributed database and wherein the second channel is separated from the first channel,
- and a respective verification information for verifying the zero-knowledge proof,
- a verification module (21) configured to verify the zero-knowledge proof depending on the verification information, and
- a second interface (22) configured to output the verification result for transferring the state data and/or the zero-knowledge proof to the requesting node of the second channel.

13. Decentralized distributed database (DDN) comprising at least two channels, which are separated from each other, wherein
- the first channel comprises a prover node according to claim 11 and a verifier node according to claim 12,
and
- the second channel comprises a requesting node configured to request state data from the first channel.

14. Computer program product loadable into the internal memory of a digital computer, comprising software code portions for performing the method steps of one of the claims 1 to 11 when said computer program product is run on a computer.
